# EUROPEAN PATENT APPLICATION

(11) **EP 1 898 358 A1**
(43) Date of publication of application: **12.03.2008**
(21) Application number: 06120154.7
(22) Date of filing: 05.09.2006
(51) Int. Cl.: G06T 15/70

(54) **SVG script editor**

(71) Applicant: Research In Motion Limited, Waterloo, Ontario N2L 3W8 (CA)
(72) Inventor: Ducharme, Dale, Toronto,Ontario M6B 2N4 (CA)
(74) Representative: Rickard, David John

(57) **Abstract**

An authoring tool for programming Scalar Vector Graphics (SVG) includes a camera tool. The camera tool may be manipulated to select portions of content to be displayed on a target device to define an SVG viewport and viewBox attributes for the content. The viewBox attributes may be animated, defining a plurality of viewBox attribute values from data captured in association with key frames using the camera tool.

## Description

The present application relates to the programming of content for rendering such as on a display and more particularly to a method and system for establishing a coordinate system for content to be displayed and for animating the coordinate system to animate the content.

Devices such as personal computers, handheld devices including gaming devices, wireless mobile devices (cellular phones, PDAs, etc.) among others, typically have a display device for presenting content to users. Content may be part of a user interface for an application or operating system for the device, for example.

A variety of techniques exist for defining content for displaying on a device. One method employs mark-up language. Scalable Vector Graphics (SVG) is an extensible Mark-up Language (XML) based modularized language for describing two-dimensional vector and mixed rastor/vector graphics. SVG is an open standard created by the World Wide Web Consortium (W3C) and a specification therefore may be found at http://www.w3.org/TR/SVG.

SVG allows for three types of graphic objects: vector graphic shapes (e.g., paths consisting of straight lines and curves), images and text. Graphical objects can be grouped, styled, transformed and composited into previously rendered objects.

Graphic objects are rendered on a SVG canvas, a surface onto which elements are drawn, including physical media (e.g. a display or piece of paper) or an abstract surface (e.g. a region of computer memory). A coordinate system defines locations and distances on the current canvas and a viewport provides a current rectangle on the canvas where the graphic elements are to be rendered. For visual media like a display, the viewport is the viewing area where the user sees the SVG content.

Content such as images may be identified for rendering in the viewport. Coordinate system changes in the form of transformations control the size, position, rotation and skew of graphic elements in the viewport. Sometimes it is desirable to fit all or part of some content (e.g. to enlarge a portion of an image) into a particular viewport and one form of transformation pursuant to the SVG standard is the viewBox. The viewBox attribute provides the capability to specify that a given set of graphics stretch to fit a particular viewport. By specifying particular viewBox values, the user agent (i.e. software rendering the SVG graphics), determines the applicable transformation to render the content in the viewport.

ViewBox attribute may be animated in accordance with the SVG standard. Thus, a set of viewBox attribute values may be specified to animate the content. In this way, content comprising a single 2D graphic image may be rendered in different ways such that it appears to be a moving or even appears to be more than one image. Yet, minimal storage on the device is required as only a single image is stored for rendering.

Authoring tools, such as graphics editors, particularly SVG tools, help content developers to produce graphics for display, automating the writing of SVG or other applicable language expressing the graphics. It is therefore desirable to provide an authoring tool that establishes and animates a coordinate system for content for rendering on a display.

A solution that addresses one or more of these issues is therefore desired.

### GENERAL

The description and figures herein present an authoring tool for programming Scalar Vector Graphics (SVG) that includes a camera tool. The camera tool may be manipulated to select portions of content to be displayed on a target device to define an SVG viewport and viewBox attributes for the content. The viewBox attributes may be animated, defining a plurality of viewBox attribute values from data captured in association with key frames using the camera tool.

In one aspect there is provided a method of programming graphics for display on a target device. The method comprises: providing an authoring tool to program graphics in accordance with a Scalar Vector Graphics (SVG) specification, the authoring tool presenting a canvas interface for working with content to be displayed and a camera tool having a camera object for selecting one or more portions of the content for display; in response to user input to select and manipulate at least one of a size and a position of the camera object on the canvas, defining initial coordinates for the content and capturing the position and size of the camera object to define subsequent coordinates for the content; and outputting an SVG document expressing the initial coordinates and subsequent coordinates to define a viewport and a viewBox attribute in association with the content.

The method may also comprise further capturing the position and size of the camera object in response to further user input and defining a plurality of subsequent coordinates in association with key frames thereby to animate the content when displayed. The SVG document thus preferably includes an SVG animation element to animate the viewBox attribute in accordance with the plurality of subsequent coordinates associated with the key frames. The authoring tool may present an animation interface with which to work with the key frames.

In accordance with an aspect of the method, the initial coordinates are determined in response to a size of the canvas and the subsequent coordinates are determined in response to the captured position and size of the camera object and the size of the canvas.

Preferably, the authoring tool presents an interactive interface in association with the camera tool to permit a user to manually provide position and size data with which to define the subsequent coordinates.

Other aspects including computer system and computer program product (software) aspects will be apparent to persons of ordinary skill in the art.

### BRIEF DESCRIPTION OF THE DRAWINGS

In order that the subject matter may be readily understood, embodiments are illustrated by way of examples in the accompanying drawings, in which:

Figures 1-7 illustrate views of an SVG authoring tool adapted with an SVG camera tool and showing an example editing session to define and animate content; and

Figure 8 is representative XML expressing the SVG authored in accordance with the example of Figs. 1-7;

Figure 9 is a schematic diagram of the SVG authoring tool adapted with the SVG camera tool according to an embodiment; and

Figures 10 is flowchart of an example of operations using the camera tool.

### DESCRIPTION OF PREFERRED EMBODIMENTS

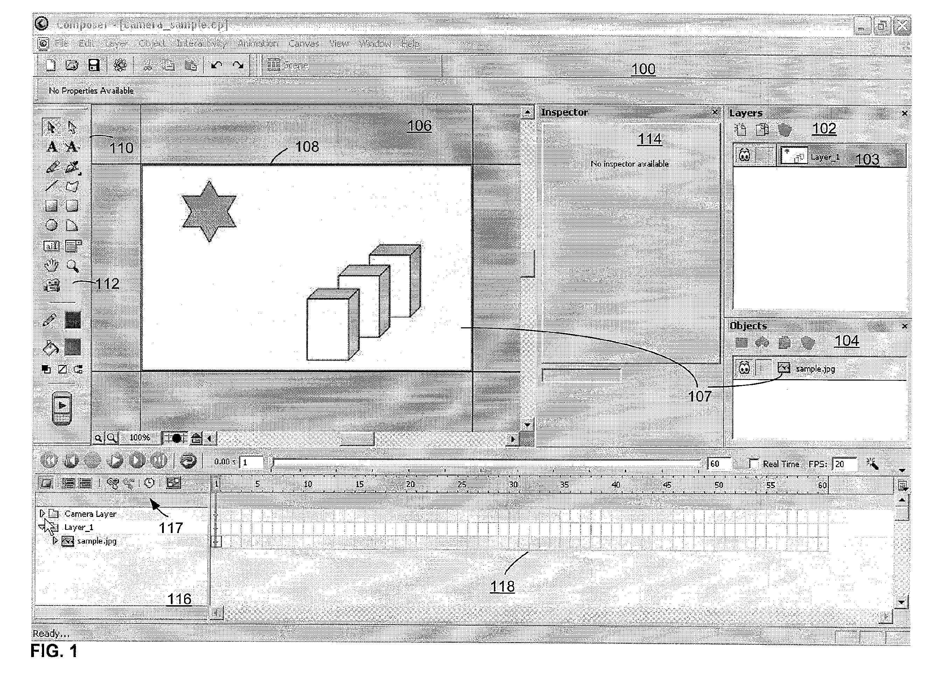

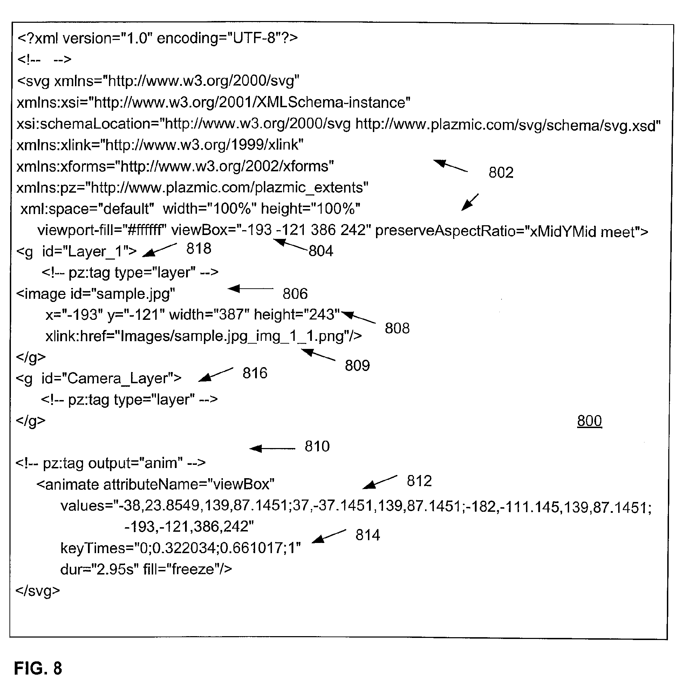

Figures 1-7 illustrate views of an SVG authoring tool including an SVG camera tool, in accordance with an embodiment. Figures 1-7 show an example editing session using the camera tool and an animation panel to define SVG content for displaying on a display (typically for a target device, such as handheld wireless communication device). In brief, during the session, an image object is identified as a basis of the content for displaying. The camera tool is utilized to define a viewport and an initial viewBox to initially show a portion of the image on the display, effectively scaling (i.e. enlarging) the portion to the size of the display. The camera tool is manipulated to define a camera path over the image, animating a panning effect when the image is displayed on the target device. The camera tool is further manipulated to change the size of the viewBox thereby animating a zoom effect when the image is displayed on the target device. Figure 8 illustrates XML expressing the SVG of the example editing session.

With reference to Figure 1, there is illustrated a view 100 of a user interface (Ul) for the authoring tool. Various panels and display portions of the authoring tool UI are shown. For example, layer portion 102 is for specifying layers, for example, to group one or more SVG elements. An objects portion 104 is for identifying objects as SVG elements for a layer. A document viewer 106 including a canvas 108 shows the layer being defined. A set of toolbox tools 110 is provided for working on the canvas, including a camera tool 112. An inspector portion 114 is provided for controlling object formatting (setting object parameters for selected objects on the canvas) and for setting authoring tool settings. An animation panel interface 116 is for editing key frame animation information for objects in the layer.

In accordance with the example, an image object 107 "sample.jpg" is identified as an element for Layer_1 103 and is shown displayed on canvas 108. Sample.jpg 107 is merely an example of content that can be displayed. A simple greyscale image is shown for photo-reproduction purposes. Other images of various colours or resolution may be used and each is typically chosen with the capabilities of the target device in mind.

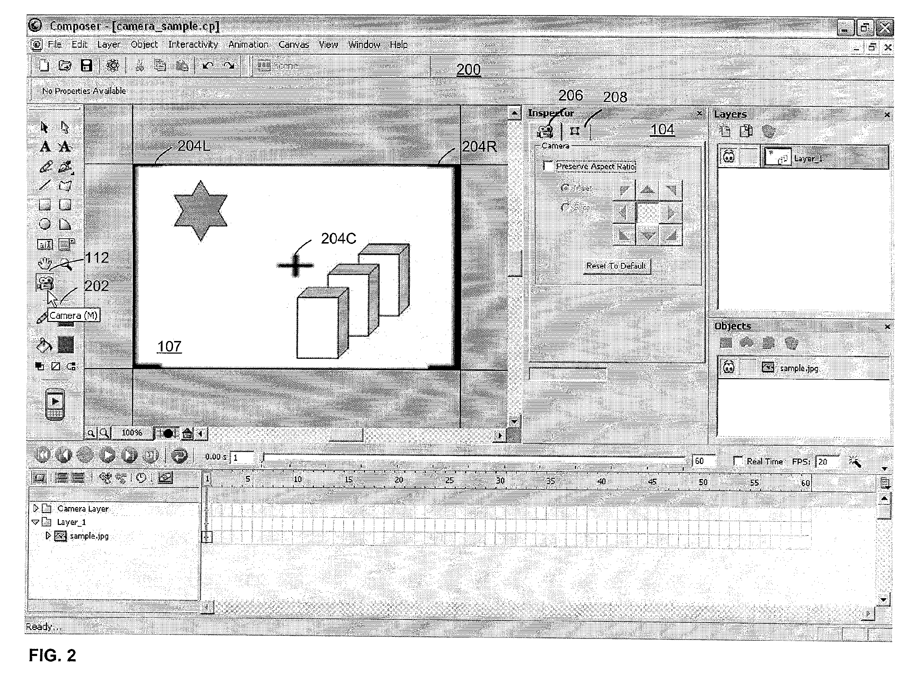

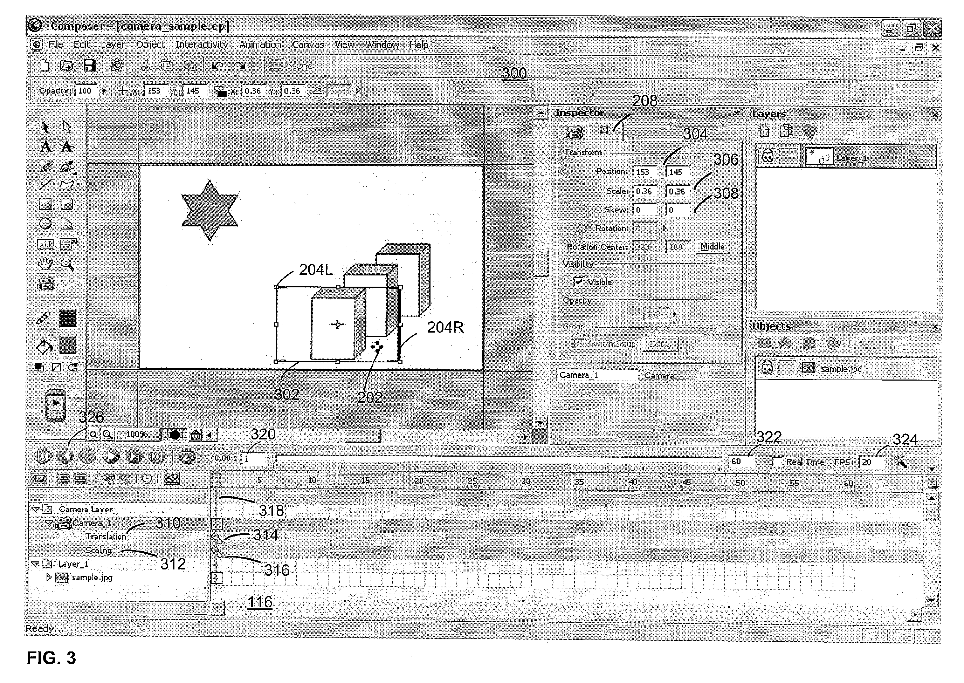

View 200 of Figure 2 shows the selection of camera tool 112, such as by selecting with a pointing device (e.g. mouse) 202, for working on the canvas 108. Camera tool 112 may also be invoked by a short cut key such as "M". Invoking the camera tool 112 sets a default camera view, which is the size of the canvas 108. A camera object comprising left, right and centre portions 204L, 204R and 204C (collectively 204) is rendered on the canvas 108 over image 107. Invoking the camera tool 112 also invokes the corresponding inspector 104 interfaces (tabs 206 and 206) for specifying object properties. The properties that can be set in the various inspector interfaces are typically responsive to the tool (one of the set of toolbox tools 110) invoked and the object to which the tool is applied. Camera tool 112 has associated inspector interface 206 for specifying scaling parameters for aspect ratio preservation in accordance with the SVG specification. Inspector interface 208 (shown in more detail in Figure 3) specifies additional object properties such as transformation properties, a visibility property to turn the visibility of the object in the layer on or off, etc.

Pointer 202 may be used to select the camera object 204 in the document window 106 to manipulate its size and position about the canvas 108. View 300 of Figure 3 illustrates such a selection where the camera object 204 is supplemented with a box 304 showing various handles at corners and edge midpoints for changing the size of camera object 204. Changing the size zooms the camera object 204. Shrinking the size of object 204 makes the selected portion of the image larger when scaled for display on the device and vice versa.

Scaling values are interactively updated and are reflected in inspector interface 208 at 306. Size changes may also affect the position of the camera object. As such position values may also be interactively updated and reflected in inspector interface 208 at 304. Selecting inside box 302 (see pointer 202) allows movement of the position of the camera object 204 about the canvas 108. Changing the position translates the camera object position to pan about the image 107. Again, the position values are interactively updated and reflected in inspector interface 208 at 304. Transformation settings 304-308 may also be set manually through the interface 208.

In addition to establishing the initial position and size of the viewport and viewBox coordinates, the camera tool 112 may be used to define animation of the content. Key frame animation enables the content developer to animate the viewBox position and size. Key frames are placed at different points in an animation timeline and the authoring tool/user agent determine the content of the frames in between the key frames. Key frame animation is sequential. Key frames may be added, deleted and moved about the time line using the animation panel interface 116 and its tools 117.

Animation panel 116 shows key frame animation information for layers and objects and, in particular, position and size information in the form of translation 310 and scaling 312 properties under control of camera object 204 (i.e. Camera_1). Such properties may be used to establish key frame data 314 and 316 in key frames such as frame 1 (under frame bar 318) for a series of animation frames. In the present example there are 60 frames though only key frame 1 is defined at this point. Start and end frame numbers 320, 322 may be set such as when playing back the animation via controls 326. Animation settings such as frames per second 324 may be established for determining frame transition speed. Additional key frames are established as described below. Key frame data may be set or manipulated at the frame, layer, object and property level.

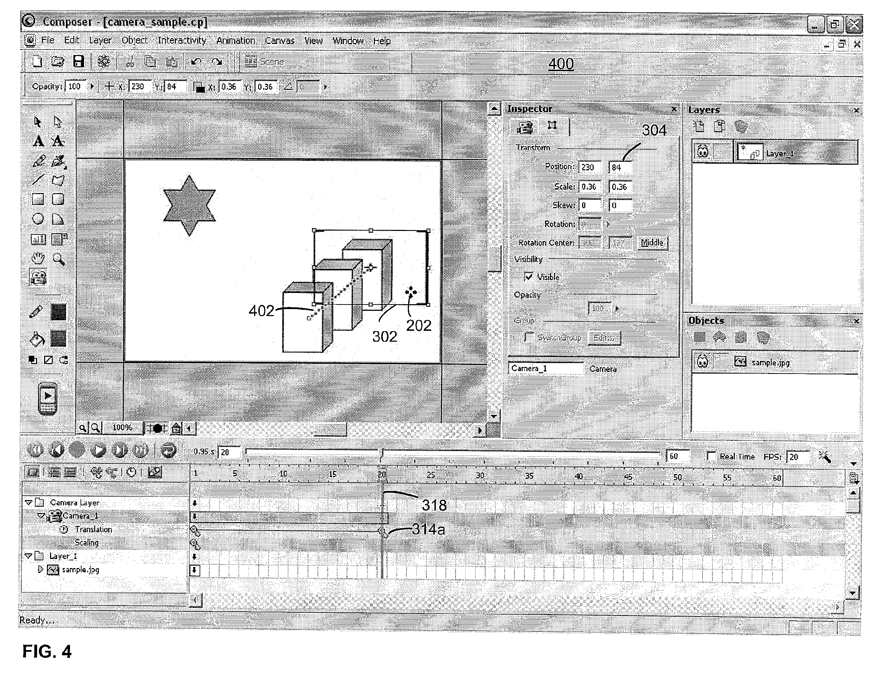

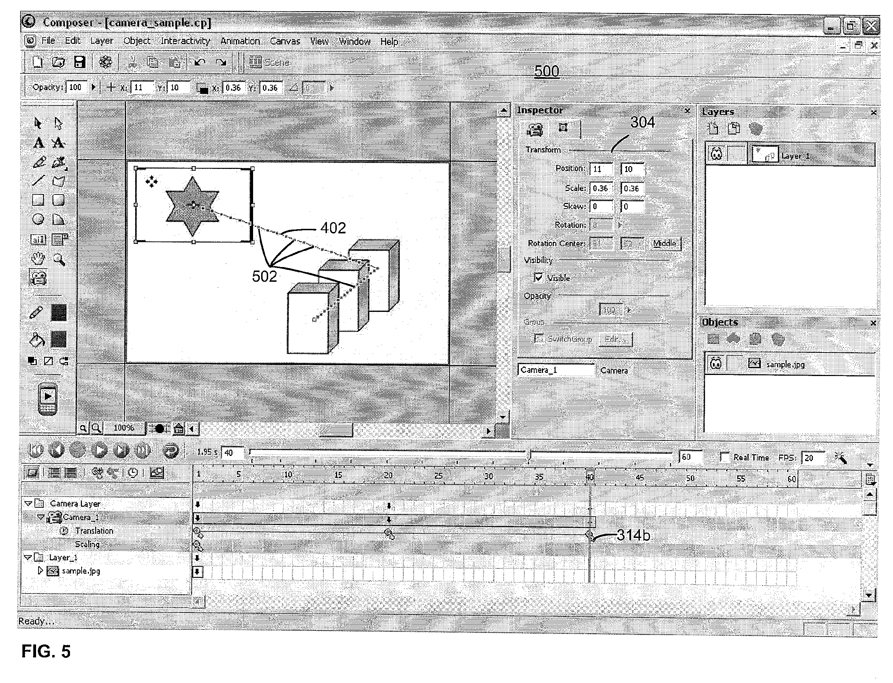

In view 400 (Fig. 4) there is illustrated the establishment of a new key frame with frame bar 318 at frame 20 (under bar 318 of Fig 4). New translation property key frame data 314a is set to reflect the new position of camera object 204 on canvas 108 with the position data as shown in interface 304. Clicking and dragging the camera object from the centre via pointer 202 establishes a new viewport position relative to the canvas 108 and a camera path 402 illustrates the movement of the camera object from its initial location captured to key frame 1 and its current location captured to key frame 20. Path 402 shows the path of central camera object 204c. As the scale remains the same, a new key frame for the scaling property is not required. Figure 5 illustrates a further view 500 with a translation of the position with a further key frame 314b for this property 310 at frame 40. Again, the new position of camera object 204 (viz. the upper left corner of 204L) is shown in interface 304. Path 402 extends to show the new movement. Note that path 402 also shows individual frame points (e.g. 502) roughly indicating individual frames in the time line. Figures 4 and 5 each illustrate panning.

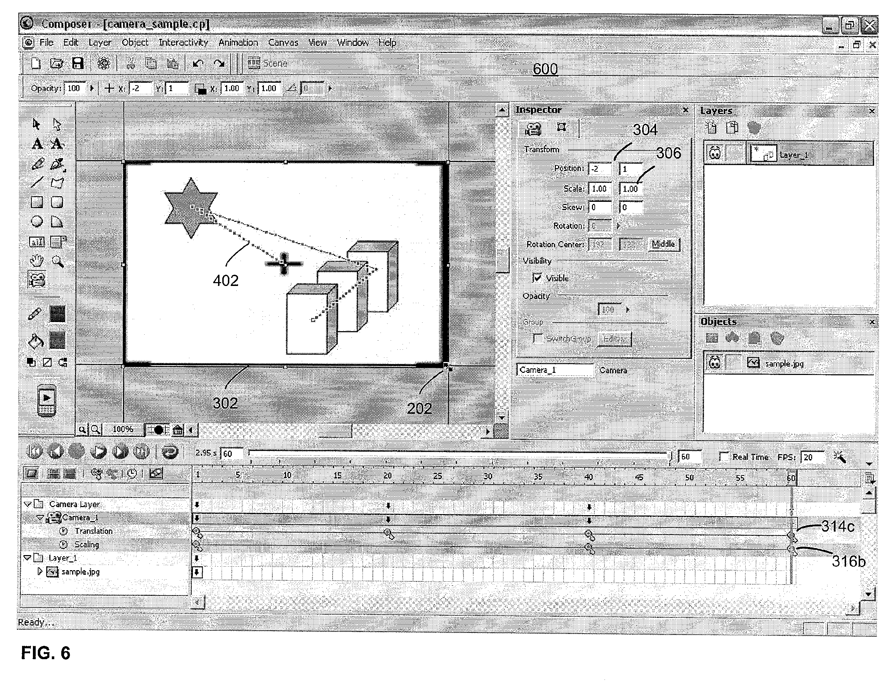

View 600 of Figure 6 illustrates a zoom out. The size of box 302 is increased to the margins of the canvas to display the whole of the object 107. Pointer 202 may select a corner point and drag out the box 302, moving camera object 204. The change in position and scale are shown in interface 304 and 306. A new key frame is established at frame 60. Note that key frames at frame numbers 20, 40 and 60 are arbitrarily selected for this example. Other frame numbers could have been used. Different pans and zooms could have been shown. Properties 310 and 312 establish new key frame data 314c and 316b at frame 60. This ends the editing session.

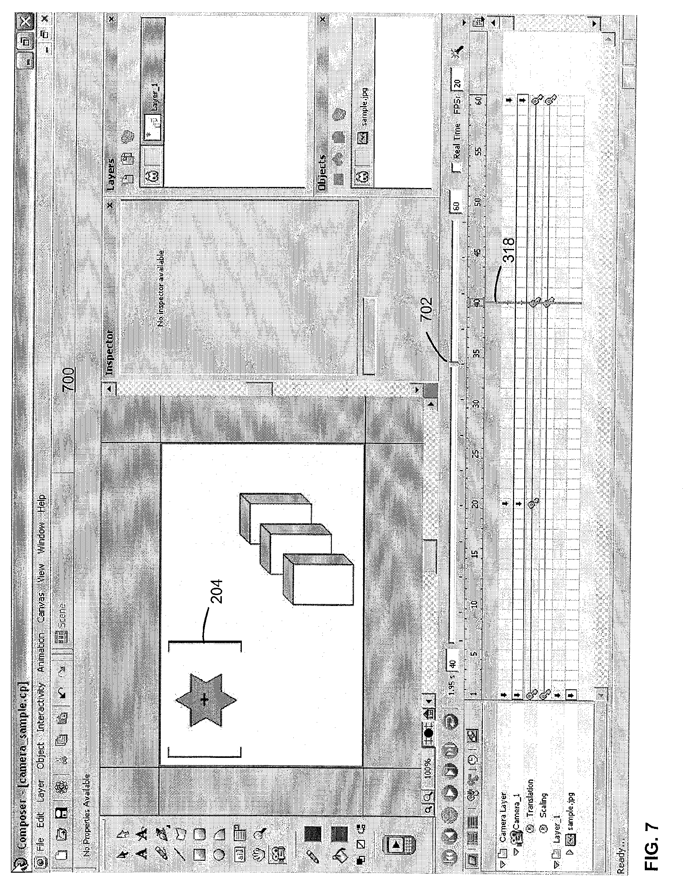

View 700 of Figure 7 shows animation effects in a simulation (such as by moving a slider 702 (as shown) or using play from controls 326 (not shown)) with frame bar 318 at frame 40 and the camera object 204 at its recorded position and size at this point in the timeline. Simulation may be used to confirm the desired animation. Further edits such as to add frames or make changes or deletions, etc. to existing frames could be performed (not shown).

The authoring tool captures the position and size information as well as other settings (e.g. number of frames, frame speed), canvas size, etc. to determine the appropriate particulars of the SVG XML it is to express as output for the content. Position data representing the x and y position of the upper left corner 204L camera object on the canvas 108 is noted. The upper left corner of the canvas is pixel coordinate (0,0) and lower right corner is represented by the size of the canvas 106. In the present example, the canvas is 386 by 242 pixels. Thus the lower right corner of the canvas is (386,242).

On the other hand, SVG coordinates use (0,0) as the center of the viewport. Thus the upper left corner of a 386 by 242 pixel viewport is (-193, -121). Appropriate transformations are necessary when outputting XML from camera object captured values.

Identifying the image and selecting the camera object establishes initial particulars for an "image" element of SVG. In SVG, an 'image' element establishes a new viewport. The bounds for the new viewport are defined by attributes x, y, width and height. The placement and scaling of the referenced image are controlled by the preserveAspectRatio attribute defining how the image is fitted into the viewport. A viewBox attribute indicates the portion of the image to use to stretch to fit the viewport. The value of the viewBox attribute is a list of four numbers <min-x>, <min-y>, <width> and <height>, separated by whitespace and/or a comma, which specify a rectangle in user space which should be mapped to the bounds of the viewport established by the given element, taking into account attribute preserveAspectRatio.

As noted, the initial viewBox starts with a coordinate system starting at the upper left at (-193, -121) with the width 386 and height 242 (which happens to be the size of the image in this case). As the camera object 204 was positioned and sized, scale property values for x and y (ratios of the size of box 302 to the canvas size) could be determined.

Table 1 shows values to define the viewBox attribute values in view of the camera object values at the key frame and times from the animation editing session:

**Table 1 - Captured Camera Position and Exported viewBox Values**

| Time | Frame | Viewbox | Export | | | Captured | Values | | |
|---|---|---|---|---|---|---|---|---|---|
| | | x | y | width | height | x | y | scale x | scale y |
| 0 | 1 | -38 | 23.8549 | 139 | 87.1451 | 155 | 145 | 0.36 | 0.36 |
| 0.95 | 20 | 37 | -37.1451 | 139 | 87.1451 | 230 | 84 | 0.36 | 0.36 |
| 1.95 | 40 | -182 | -111.145 | 139 | 87.1451 | 11 | 10 | 0.36 | 0.36 |
| 2.95 | 60 | -193 | -121 | 386 | 242 | 0 | 0 | 1 | 1 |

Figure 8 illustrates representative XML 800 output. An SVG tag 802 provides initial viewport width and height values and viewBox attribute values. The initial viewBox attribute values 804 are determined in accordance with the size of the canvas as noted. An image element tag 806 is expressed for object sample.jpg showing its viewport attribute values 808 and defining a reference to the location of the content 809.

An SVG animation element (i.e animate element 810) is expressed for animating the viewBox attribute of the elements of this svg element. Importantly viewBox attribute values 812 at the 4 key frame times and the KeyTimes 814 are provided. KeyTime values for the transitions between viewBox values may be determined in response to the animation timeline (i.e. key frame position in the 60 frames and the frames per second value). Thus the SVG output 800 may be used by a user agent (e.g. browser or other SVG compliant display application) to render the content on a target display. The portion of the image and its scaling to fit the viewport is determined in accordance with these parameters over the time specified thereby creating panning and zooming effects.

Persons of ordinary skill in the art will see that additional XML tags are present in the output 800 such as g elements 816 and 816 for grouping related graphics elements (such as Camera_Layer and Layer_1).

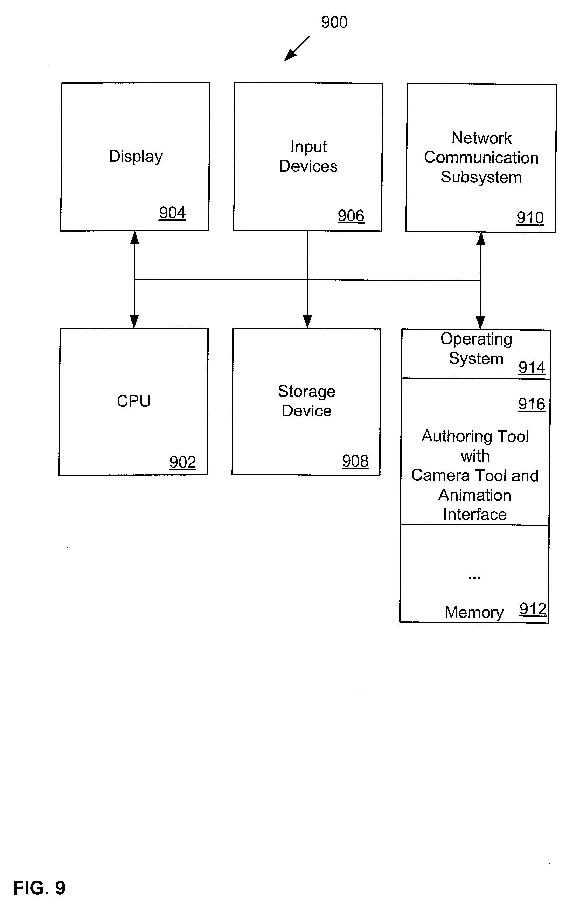

Figure 9 illustrates selected components of an example content developer computing system 900 comprising at least one CPU (microprocessor), a display device 904, input devices 906 (such as a keyboard and pointing device (e.g. mouse)), persistent storage devices/IO devices for longer term storage (e.g. hard drive, CD/ROM, etc.), network communications subsystem 910, and RAM and other operating memory (flash or ROM, etc) 912 for storing software (instructions and data) to configure the CPU with an operating system 914 and to provide an authoring tool 916 including a camera tool and animation interface for animating the camera view as described. Memory 912 may also store the various captured and input properties, parameters and settings and the XML. Such may also be stored to device 908 or to a remote device (not shown) via a network (not shown) coupled via subsystem 910.

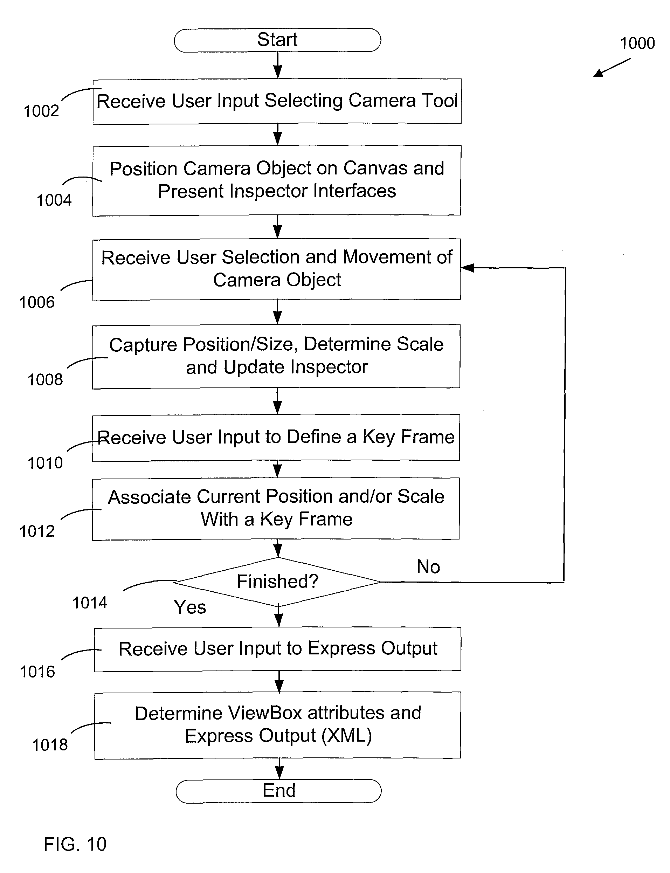

Figure 10 shows a flowchart of operations 1000 for an example session using the camera tool, manipulating the camera object to input data for determining the viewBox attribute. Such operations may be performed using software (e.g. 914) that configures system 900. In this example, the layer to be defined and the image object to be used have already been identified and the image is displayed on canvas 108.

At step 1002, user input is received by the authoring tool to select the camera tool. At step 1004, the camera object 204 is positioned about the canvas 108 (e.g. Fig 2). The inspector 104 is updated with the applicable interfaces 204, 208. Initial property data is set (e.g. x,y position (0,0) and x,y scaling (1.00, 1.00) as applicable with aspect ratio preservation settings).

At 1006, the user selects and moves camera object 204 (these user inputs are treated together for simplicity). Selection box 302 is shown when the object is selected and the position of the object is captured as is its size. Scaling is determined. The data for the inspector interface is updated. Steps 1006 and 1008 may repeat, for example, as the object is moved or for sequential movements should the user stop and restart, etc. (not shown).

At step 1010, user input for key frame animation to define a key frame is received. At step 1012, the current position and scale of the camera object 204 is associated with a key frame. A user's first input to define a key frame typically sets key frame 1 with both position and scale key frame data (314, 316). Subsequently defined key frames may define key frame data for position, scale or both. Operations loop at 1014 to step 1006 to define subsequent key frames. Though not shown in operation 1000, a path 402 may be drawn when moving the camera object as described above (Figure 4) when dragging the camera object around the canvas to define panning or zooming animation thereby defining a series of key frames in an animation timeline.

If the user has finished defining the animation, operations 1000 flow to step 1016 where user input to express the layer defined through the above described steps is received. The markup language to be expressed is determined as referenced above, and applicable XML tags for SVG are expressed.

In brief, the camera tool presents to the user an intuitive interface for dealing with Scalable Vector Graphics (SVG) viewBox/viewport tags. The authoring tool exports to SVG and within the specification is the notion of a viewBox (http://www.w3.org/TR/SVG/coords.html#ViewBoxAttribute). The viewBox attribute establishes a coordinate system for the content which is mapped onto a viewport. The coordinate system in the authoring tool starts with the upper left hand corner being (0, 0) and the bottom right hand corner typically being the dimensions of the target device being used (e.g. 240,260). By specifying a viewBox it establishes a viewport into the canvas. By default the initial viewBox is the size of the canvas.

Through the camera tool, it allows the modification of the viewport directly on the canvas. When clicking on the camera tool, a viewport camera object is displayed on the canvas. By modifying the handles of the camera object, the content developer is able to change the width and height (size) of the viewport as well as the position of the viewport. These values may be animated as well.

By animating the position of the camera object on the canvas the developer can effectively create a pan of the camera which is an intuitive concept to an end user. By animating the scale of the camera object, the developer can effectively create a zoom of the camera which is also an intuitive concept to the user. The values of the animated camera object are exported to the SVG as an animation of the viewBox attributes specifed by position (x,y) and size (width, height) over time.

### COPYRIGHT NOTICE

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyright whatsoever.

## Claims

1. A method of programming graphics on a computer system for display on a target device, said method comprising:
providing an authoring tool to program graphics in accordance with a Scalar Vector Graphics (SVG) specification, said authoring tool presenting a canvas interface for working with content to be displayed and a camera tool having a camera object for selecting one or more portions of the content for display;
in response to user input to select and manipulate at least one of a size and a position of the camera object on the canvas, defining initial coordinates for the content and capturing the position and size of the camera object to define subsequent coordinates for the content; and
outputting an SVG document expressing the initial coordinates and subsequent coordinates to define a viewport and a viewBox attribute in association with the content.

2. The method of claim 1 further comprising further capturing the position and size of the camera object in response to further user input and defining a plurality of subsequent coordinates in association with key frames thereby to animate the content when displayed.

3. The method of claim 2 wherein the SVG document comprises an SVG animation element to animate the viewBox attribute in accordance with the plurality of subsequent coordinates associated with the key frames.

4. The method of claim 2 wherein the authoring tool presents an animation interface with which to work with the key frames.

5. The method of any one of claims 1 to 4 wherein the initial coordinates are determined in response to a size of the canvas and wherein the subsequent coordinates are determined in response to the captured position and size of the camera object and the size of the canvas.

6. The method of any one of claims 1 to 4 wherein the authoring tool presents an interactive interface in association with the camera tool to permit a user to manually provide position and size data with which to define the subsequent coordinates.

7. A computer program product having computer readable code embodied therein, for execution by a processor for configuring a computer system to program graphics for display on a target device, said computer program product comprising instructions and data for configuring a processor of the computer system to cause said computer system to perform the method of any one of claims 1 to 6.

8. A computer system for programming graphics for display on a target device, said computer system comprising:
a processor coupled to a memory storing software for execution by the processor, said software defining an authoring tool to program graphics in accordance with a Scalar Vector Graphics (SVG) specification and for configuring said processor to cause said computer system to perform the method of any one of claims 1 to 6.
